# FASCICULE DE BREVET EUROPEEN

(11) **EP 3 268 256 B1**
(45) Date de publication et mention de la délivrance du brevet: **19.06.2019**
(21) Numéro de dépôt: 16713535.9
(22) Date de dépôt: 02.03.2016
(51) Int. Cl.: B60W 50/14, G08G 1/16, B60W 30/08, B60W 30/18, B60W 50/00

(54) **PROCÉDÉ ET DISPOSITIF D'AIDE AU DÉPASSEMENT D'UN VÉHICULE EN PRÉSENCE D'UN AUTRE VÉHICULE INVISIBLE ET CIRCULANT À CONTRESENS**
VERFAHREN UND VORRICHTUNG ZUR UNTERSTÜTZUNG BEIM ÜBERHOLEN EINES FAHRZEUGS IN ANWESENHEIT EINES ANDEREN, NICHT SICHTBAREN, ENTGEGENKOMMENDEN FAHRZEUGS
METHOD AND DEVICE FOR ASSISTING WITH OVERTAKING A VEHICLE IN THE PRESENCE OF ANOTHER, NON-VISIBLE, ONCOMING VEHICLE

(30) Priorité: 09.03.2015 FR 1551948
(43) Date de publication de la demande: 17.01.2018
(73) Titulaire: PSA AUTOMOBILES S.A., 78300 Poissy (FR)
(72) Inventeur: LESEIGNEUR, Christelle, 78180 Montigny Le Bretonneux (FR); LAYERLE, Jean-Francois, 94320 Thiais (FR); ETCHEVERRY, Celine, 91370 Verrieres Le Buisson (FR); CAMPO, Marc, 92320 Chatillon (FR); GURRET, Fabien, 92160 Antony (FR)
(86) Numéro de dépôt international: PCT/FR2016/050469
(87) Numéro de publication internationale: WO 2016/142603

(56) Documents cités:
- WO-A1-2011/095974
- WO-A2-03/001474
- DE-A1-102006 055 344
- DE-A1-102011 113 324
- DE-A1-102012 005 245
- US-A1- 2014 278 045

## Description

L'invention concerne les véhicules, éventuellement de type automobile, et plus précisément les dispositifs et procédés qui permettent d'aider pendant les dépassements effectués par de tels véhicules.

Un procédé et un dispositif d'aide au dépassement tel que défini par le préambule des revendications 1 et 7 est connu de WO 03/001474.

Lorsqu'un premier véhicule circule sur une première voie de circulation et qu'un deuxième véhicule circulant sur cette première voie de circulation veut le dépasser, il peut arriver qu'il soit impossible de voir du deuxième véhicule un troisième véhicule circulant à contresens sur une seconde voie de circulation jouxtant la première. Cette impossibilité peut, par exemple, résulter de conditions climatiques difficiles (brouillard, neige, averse) et/ou de la présence d'un quatrième véhicule circulant sur la seconde voie de circulation devant le troisième véhicule et donc masquant ce dernier. Dépasser dans de telles situations devient alors une opération risquée, voire très risquée.

Il a certes été proposé que les véhicules circulant selon des sens opposés s'échangent par voie d'ondes à courte portée des informations représentatives de leurs positions et vitesses respectives, afin que l'un d'entre eux puisse effectuer un dépassement moins risqué. Mais cela s'avère encore insuffisant dans certaines situations, et notamment lorsque le véhicule, qui circule à contresens par rapport au véhicule voulant dépasser, n'est pas en mesure de fournir les informations le concernant, ou lorsque deux véhicules, circulant selon des sens opposés, veulent effectuer sensiblement simultanément des dépassements sur des véhicules qui les précèdent respectivement, ou encore lorsqu'un véhicule veut dépasser un autre véhicule qui le précède et qui est lui-même précédé par au moins un autre véhicule.

L'invention a donc notamment pour but d'améliorer la situation.

Elle propose notamment à cet effet un procédé, destiné à aider pendant le dépassement d'un premier véhicule par un deuxième véhicule alors qu'un troisième véhicule que ce dernier ne peut pas voir circule à contresens. Ce procédé se caractérise par le fait qu'il comprend :
- une première étape dans laquelle le premier véhicule émet par voie d'ondes, à destination du deuxième véhicule et après avoir détecté le troisième véhicule, un message comportant des position et vitesse détectées de ce dernier, une information représentative du fait qu'il circule à contresens et ses propres position et vitesse en cours, et
- une seconde étape dans laquelle le deuxième véhicule détermine, à réception de ce message, si il peut dépasser sans risque le premier véhicule en fonction des position et vitesse détectées du troisième véhicule, des position et vitesse en cours du premier véhicule, et d'une distance le séparant de ce dernier, et pour générer un message représentatif d'un résultat de cette détermination à destination de son conducteur et/ou autoriser ou interdire le dépassement en fonction de ce résultat.

Grâce aux informations fournies par le premier véhicule et représentatives des véhicules qui le précèdent (en particulier ceux qui roulent à contresens), le deuxième véhicule est mieux informé sur les véhicules qu'il ne peut pas voir et donc le risque de collision avec l'un de ces véhicules est très notablement réduit lorsqu'il autorise un dépassement.

Le procédé selon l'invention peut comporter d'autres caractéristiques qui peuvent être prises séparément ou en combinaison, et notamment :
- dans la première étape le premier véhicule peut inclure dans son message une information qui est représentative du nombre de véhicules circulant devant lui et dans le même sens et des estimées des positions et vitesses en cours respectives de ces derniers véhicules. Dans ce cas, dans la seconde étape le deuxième véhicule détermine, à réception du message, si il peut dépasser sans risque le premier véhicule en fonction également de ces estimées reçues ;
- dans la première étape le premier véhicule peut inclure dans son message, après avoir détecté le troisième véhicule derrière un quatrième véhicule avec une intention de dépasser ce dernier, une information qui est représentative de cette intention de dépassement et des position et vitesse en cours du quatrième véhicule. Dans ce cas, dans la seconde étape le deuxième véhicule détermine, à réception du message, si il peut dépasser sans risque le premier véhicule en fonction également de cette intention de dépassement et des position et vitesse en cours du quatrième véhicule ;
   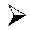 dans la première étape le premier véhicule peut déterminer l'intention de dépassement du troisième véhicule en fonction de données d'observation fournies par des moyens d'acquisition qu'il comprend et/ou par le troisième véhicule ;
- dans la première étape le premier véhicule peut déterminer chaque position et chaque vitesse de chaque véhicule en fonction de données d'observation fournies par des moyens d'acquisition qu'il comprend et/ou par au moins un véhicule qui le précède ou qui circule à contresens ;
- dans la seconde étape le deuxième véhicule peut générer un message textuel et/ou audio à destination de son conducteur.

L'invention propose également un dispositif d'aide, destiné à aider pendant le dépassement d'un premier véhicule par un deuxième véhicule alors qu'un troisième véhicule que ce dernier ne peut pas voir circule à contresens.

Ce dispositif d'aide se caractérise par le fait qu'il comprend des moyens de contrôle destinés à être implantés dans le deuxième véhicule et agencés, en cas de réception par ce dernier d'un message émis par voie d'ondes par le premier véhicule consécutivement à la détection du troisième véhicule et comportant des position et vitesse détectées de ce dernier, une information représentative du fait qu'il circule à contresens et ses propres position et vitesse en cours, pour déterminer si le deuxième véhicule peut dépasser sans risque le premier véhicule en fonction des position et vitesse détectées du troisième véhicule, des position et vitesse en cours du premier véhicule, et d'une distance le séparant de ce dernier, et pour générer un message représentatif d'un résultat de cette détermination à destination de son conducteur et/ou autoriser ou interdire le dépassement en fonction de ce résultat.

Par exemple, les moyens de contrôle peuvent être agencés, lorsque le deuxième véhicule est suivi, pour déclencher l'émission par voie d'ondes d'un message comportant les position et vitesse détectées du troisième véhicule, une information représentative du fait que ce troisième véhicule circule à contresens, et ses propres position et vitesse en cours.

L'invention propose également un véhicule, éventuellement de type automobile, et comprenant un dispositif d'aide du type de celui présenté ci-avant.

D'autres caractéristiques et avantages de l'invention apparaîtront à l'examen de la description détaillée ci-après, et des dessins annexés, sur lesquels:

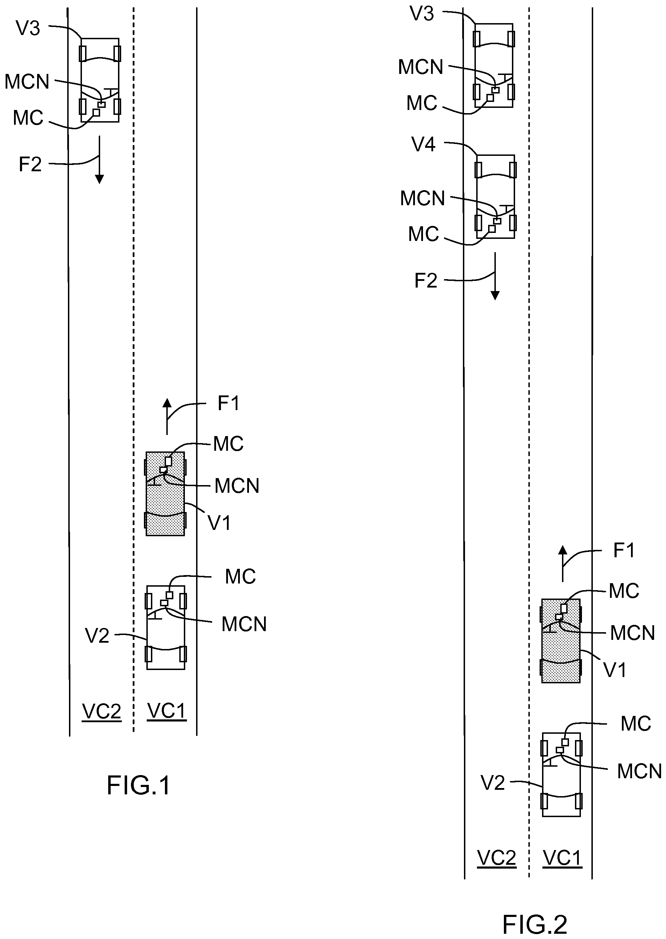

- la figure 1 illustre schématiquement une première voie de circulation sur laquelle circulent des premier et deuxième véhicules (équipés chacun d'un dispositif d'aide selon l'invention), et une seconde voie de circulation jouxtant la première voie de circulation et sur laquelle circule à contresens un troisième véhicule (équipé d'un dispositif d'aide selon l'invention),
- la figure 2 illustre schématiquement une première voie de circulation sur laquelle circulent des premier et deuxième véhicules (équipés chacun d'un dispositif d'aide selon l'invention), et une seconde voie de circulation jouxtant la première voie de circulation et sur laquelle circulent à contresens des troisième et quatrième véhicules (équipés chacun d'un dispositif d'aide selon l'invention), et

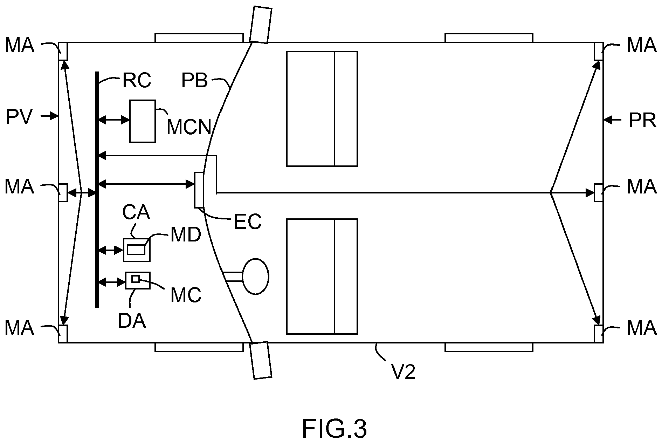

- la figure 3 illustre schématiquement et fonctionnellement, dans une vue du dessus, un exemple de véhicule équipé d'un dispositif d'aide selon l'invention.

L'invention a notamment pour but de proposer un procédé d'aide, et un dispositif d'aide DA associé, destinés à aider pendant le dépassement d'un premier véhicule V1, circulant sur une première voie de circulation VC1, par un deuxième véhicule V2, circulant sur cette même première voie de circulation VC1.

Dans ce qui suit, on considère, à titre d'exemple non limitatif, que les véhicules Vj (j = 1 à 4) sont de type automobile. Il s'agit par exemple de voitures. Mais l'invention n'est pas limitée à ce type de véhicule. Elle concerne en effet tout type de véhicule terrestre pouvant effectuer des déplacements et des manoeuvres sur le sol. Ainsi, elle concerne également les motocyclettes, les autocars, les camions, les véhicules utilitaires et les engins de chantier.

On a schématiquement représenté sur la figure 1 des première VC1 et seconde VC2 voies de circulation se jouxtant l'une l'autre. Dans cet exemple non limitatif, des premier V1 et deuxième V2 véhicules circulent selon un premier sens matérialisé par la flèche F1, et un troisième véhicule V3 circule selon un second sens, opposé au premier sens et matérialisé par la flèche F2. Le deuxième véhicule V2 suit le premier véhicule V1 et son conducteur, ou un dispositif de conduite automatisé qu'il comprend éventuellement, souhaite dépasser ce premier véhicule V1. Ce souhait est par exemple défini par la mise en fonctionnement temporaire des indicateurs de changement de direction (ou clignotants) gauche.

Comme indiqué précédemment, l'invention a notamment pour but de proposer un procédé d'aide destiné à aider le dépassement du premier véhicule V1 par le deuxième véhicule V2 en présence d'au moins un troisième véhicule V3 circulant à contresens et invisible pour le deuxième véhicule V2 comme pour son conducteur.

Ce procédé (d'aide) comprend des première et seconde étapes qui peuvent être mises en oeuvre par des dispositifs d'aide DA implantés dans les véhicules Vj.

Dans les exemples non limitatifs illustrés sur les figures 1 et 2, tous les véhicules Vj (j = 1 à 4) comprennent des dispositifs d'aide DA. Mais cela n'est pas obligatoire. En effet, pour que le procédé puisse être mis en oeuvre il faut qu'au moins les premier V1 et deuxième V2 véhicules comprennent des dispositifs d'aide DA.

Comme illustré non limitativement sur la figure 3, un dispositif d'aide DA, selon l'invention, comprend au moins des moyens de contrôle MC. Ce dispositif d'aide DA peut, comme illustré, constituer un équipement électronique embarqué. Mais cela n'est pas obligatoire. En effet, il pourrait, par exemple, être implanté dans un calculateur embarqué, et assurant éventuellement au moins une autre fonction au sein de son véhicule Vj. Par conséquent, le dispositif d'aide DA (et en particulier ses moyens de contrôle MC) peu(ven)t être réalisé(s) sous la forme de modules logiciels (ou informatiques ou encore « software »), ou bien d'une combinaison de circuits électroniques (ou « hardware ») et de modules logiciels.

On notera également que dans l'exemple illustré non limitativement sur la figure 3, le dispositif d'aide DA est connecté à un réseau de communication RC, éventuellement de type multiplexé et permettant à des équipements électroniques embarqués, qui sont connectés à lui, d'échanger des informations et instructions. Mais cela n'est pas obligatoire.

Le procédé, selon l'invention, fonctionne dès qu'un véhicule Vj détecte la présence d'au moins un autre véhicule Vj' (j' ≠ j) qui le précède sur la première voie de circulation VC1 qu'il emprunte ou sur la seconde voie de circulation VC2 qui jouxte cette première voie de circulation VC1.

Durant la première étape du procédé le premier véhicule V1 émet par voie d'ondes, à destination du deuxième véhicule V2 et après avoir détecté le troisième véhicule V3, un message qui comporte des position et vitesse détectées de ce dernier (V3), une information qui est représentative du fait que ce troisième véhicule V3 circule à contresens (par rapport à son propre sens de circulation), et ses propres position et vitesse en cours (par exemple obtenues en interne via le réseau de communication embarqué RC).

Cette détection du troisième véhicule V3 et des informations qui le représentent (au moins sa position et sa vitesse) peut se faire de trois façons.

Une première façon consiste à utiliser des moyens d'acquisition MA installés en des endroits choisis du premier véhicule V1 et chargés d'acquérir des données numériques d'observation représentatives d'une partie de l'environnement de ce dernier (V1), et au moins la zone qui est située devant lui. Ces moyens d'acquisition MA peuvent, par exemple, comprendre des caméras numériques et/ou des radars et/ou des lasers scanners et/ou des lidars. Par exemple et comme illustré non limitativement sur la figure 3, les moyens d'acquisition MA peuvent être implantés dans les boucliers ou pare-chocs avant, qui sont installés dans la partie avant PV du premier véhicule V1, ou bien dans une partie haute du pare-brise. On notera que le premier véhicule V1 peut également comprendre, comme illustré non limitativement sur la figure 3, d'autres moyens d'acquisition MA implantés dans les boucliers ou pare-chocs arrière qui sont installés dans sa partie arrière PR.

Ces moyens d'acquisition d'images MA peuvent, par exemple et comme illustré non limitativement sur la figure 3, communiquer à des moyens de détection MD les données numériques d'observation acquises (en particulier dans la zone située devant le premier véhicule V1) via le réseau de communication RC. Ces moyens de détection MD du premier véhicule V1 sont chargés d'analyser les données numériques d'observation acquises par certains des moyens d'acquisition MA, afin de déterminer au moins la position et la vitesse du troisième véhicule V3. Si les moyens de détection MD détectent un troisième véhicule V3 circulant à contresens sur la seconde voie de circulation VC2, ils en informent le dispositif d'aide DA de leur premier véhicule V1, et les moyens de contrôle MC de ce dispositif d'aide DA déclenchent l'émission par voie d'ondes à destination du deuxième véhicule V2 d'un message comportant les position et vitesse détectées du troisième véhicule V3, une information qui est représentative du fait que ce troisième véhicule V3 circule à contresens, et ses propres position et vitesse en cours.

Les moyens de détection MD peuvent, comme illustré non limitativement sur la figure 3, être implantés dans un calculateur CA qui est éventuellement connecté au réseau de communication embarqué RC. Mais ce n'est pas obligatoire. En effet, ils pourraient faire partie de l'équipement électronique embarqué comportant le dispositif d'aide DA (ou constituant ce dernier (DA)), ou bien constituer eux-mêmes un équipement électronique embarqué. Par conséquent, les moyens de détection MD peuvent être réalisés sous la forme de modules logiciels ou bien d'une combinaison de circuits électroniques et de modules logiciels.

On notera que les moyens d'acquisition MA et/ou les moyens de détection MD peuvent éventuellement faire partie du dispositif d'aide DA. Mais ce n'est pas obligatoire. En effet, ils pourraient faire partie d'un dispositif d'observation embarqué dans le premier véhicule V1 et assurant au moins une autre fonction au sein de ce dernier (V1), comme par exemple la détection de personnes ou d'objets dans l'environnement du premier véhicule V1 ou la détection de véhicules en amont et/ou en aval du premier véhicule V1 pour un système de régulation de vitesse et/ou la détection de lignes pour un système de recentrage dans la voie de circulation.

Une deuxième façon consiste à utiliser des informations qui ont été déterminées par des équipements électroniques du troisième véhicule V3 (au moins sa position et sa vitesse), et que ce dernier (V3) a intégré dans un message qu'il a émis par voie d'ondes à destination des autres véhicules présents dans son environnement. On comprendra qu'à réception de ce message, le premier véhicule V1 le transmet à son dispositif d'aide DA, et les moyens de contrôle MC de ce dispositif d'aide DA déclenchent l'émission par voie d'ondes à destination du deuxième véhicule V2 d'un message comportant les position et vitesse détectées du troisième véhicule V3, une information qui est représentative du fait que ce troisième véhicule V3 circule à contresens, et ses propres position et vitesse en cours.

Une troisième façon est une combinaison des première et deuxième façons. Elle consiste à utiliser des informations qui ont été déterminées par des équipements électroniques du troisième véhicule V3 (par exemple sa position ou sa vitesse) et transmises par voie d'ondes dans un message, et des informations complémentaires des précédentes et fournies par les moyens de détection MD du premier véhicule V1 (par exemple la vitesse ou la position du troisième véhicule V3, et le fait qu'il circule à contresens). On comprendra qu'une fois que le dispositif d'aide DA du premier véhicule V1 dispose de toutes les informations relatives au troisième véhicule V3 et concernant ses propres position et vitesses en cours, les moyens de contrôle MC de ce dispositif d'aide DA déclenchent l'émission par voie d'ondes à destination du deuxième véhicule V2 d'un message comportant les position et vitesse détectées du troisième véhicule V3, une information qui est représentative du fait que ce troisième véhicule V3 circule à contresens, et ses propres position et vitesse en cours.

Durant la seconde étape du procédé le deuxième véhicule V2 détermine, à réception du message issu du premier véhicule V1, si il peut dépasser sans risque ce dernier (V1) en fonction des position et vitesse détectées du troisième véhicule V3, des position et vitesse en cours du premier véhicule V1, et d'une distance qui le sépare de ce dernier (V1). C'est le dispositif d'aide DA du deuxième véhicule V2, et plus précisément ses moyens de contrôle MC, qui est/sont chargé(s) de cette détermination de possibilité de dépassement. Ensuite, ces mêmes moyens de contrôle MC génèrent un message qui est représentatif du résultat de cette détermination à destination du conducteur du deuxième véhicule V2 et/ou autorisent ou interdisent le dépassement du premier véhicule V1 en fonction de ce résultat.

Il est important de noter que dans ce qui précède et ce qui suit l'expression « et/ou » est destinée à permettre trois alternatives. Ainsi, on peut envisager une première alternative dans laquelle les moyens de contrôle MC du deuxième véhicule V2 génèrent un message qui n'est représentatif que du résultat de la détermination de possibilité de dépassement à destination du conducteur du deuxième véhicule V2. Dans une deuxième alternative les moyens de contrôle MC du deuxième véhicule V2 ne font qu'autoriser ou interdire le dépassement du premier véhicule V1 en fonction du résultat de la détermination de possibilité de dépassement. Dans une troisième alternative les moyens de contrôle MC du deuxième véhicule V2 non seulement génèrent un message qui est représentatif du résultat de la détermination de possibilité de dépassement à destination du conducteur du deuxième véhicule V2, mais également autorisent ou interdisent le dépassement du premier véhicule V1 en fonction du résultat de la détermination de possibilité de dépassement.

On comprendra que lorsque les moyens de contrôle MC du deuxième véhicule V2 disposent au moins des position et vitesse détectées du troisième véhicule V3, des position et vitesse en cours du premier véhicule V1, des position et vitesse en cours du deuxième véhicule V2 et de la distance qui sépare ce dernier (V2) du premier véhicule V1, ils sont en mesure de déterminer si leur deuxième véhicule V2 est capable d'effectuer le dépassement du premier véhicule V1, compte tenu de l'arrivée à contresens du troisième véhicule V3 et des règles de sécurité et de code de la route à respecter.

Toute technique de détermination de la possibilité de dépassement peut être utilisée par les moyens de contrôle MC, et notamment par détermination par voie d'ondes et/ou par caméra(s) et/ou par radar(s) de la vitesse du deuxième véhicule V2. Par exemple, si cette vitesse du deuxième véhicule V2 est inférieure à la vitesse du premier véhicule V1 alors il y a volonté de dépasser. Ensuite, s'il y a suffisamment d'espace entre le deuxième véhicule V2 et les autres véhicules alors il y a une possibilité de dépasser. L'espace suffisant peut, par exemple, être déterminé en fonction d'au moins un temps intra-véhicules imposé.

On notera que cette détermination peut également et éventuellement prendre en compte des informations auxiliaires comme par exemple la capacité d'accélération du deuxième véhicule V2.

On notera également que pour qu'un véhicule Vj puisse émettre ou recevoir un message par voie d'ondes, il faut qu'il comprenne un module de communication MCN. Chaque module de communication MCN peut être agencé de manière à émettre chaque message avec une courte portée, par exemple en utilisant le standard de communication sans fil Bluetooth ou WiFi ou Car2X. Par ailleurs, et comme illustré non limitativement sur la figure 3, chaque module de communication MCN peut être éventuellement connecté au réseau de communication RC de son véhicule Vj. Dans ce cas, chaque échange entre un module de communication MCN et les moyens de contrôle MC d'un même véhicule Vj se fait via le réseau de communication RC de ce dernier. En outre, chaque module de communication MCN d'un véhicule Vj peut être soit le module de communication sans fil de ce véhicule Vj (qui assure les communications avec un réseau de communication sans fil), soit un équipement spécifique faisant partie du dispositif d'aide DA et différant de l'éventuel module de communication sans fil de ce véhicule Vj.

On notera également qu'afin d'augmenter encore plus la sécurité des dépassements, les moyens de contrôle MC du premier véhicule V1 peuvent, dans la première étape, inclure dans leur message (destiné au deuxième véhicule V2) une information qui est représentative du nombre de véhicules circulant devant le premier véhicule V1 et dans le même sens (et donc sur la première voie de circulation VC1), et des estimées des positions et vitesses en cours respectives de ces derniers véhicules. Dans ce cas dans la seconde étape une fois que le deuxième véhicule V2 a reçu le message émis par le premier véhicule V1, ses moyens de contrôle MC peuvent déterminer si il peut dépasser sans risque le premier véhicule V1 en fonction également des estimées de position et de vitesse des véhicules circulant devant ce dernier (V1).

Ces estimées peuvent être fournies par les véhicules circulant devant le premier véhicule V1 au moyen de messages émis par voie d'ondes à courte portée. On notera que les moyens de détection MD du premier véhicule V1 ne sont en mesure de déterminer, par analyse des données numériques d'observation fournies par des moyens d'acquisition MA, que les estimées de position et de vitesse du véhicule qui circule juste devant lui, mais pas de ceux qui circulent devant ce dernier.

On notera également qu'afin d'augmenter encore plus la sécurité des dépassements, le premier véhicule V1 peut, dans la première étape, détecter les situations dans lesquelles le troisième véhicule V3 circule derrière un quatrième véhicule V4 avec une intention de dépasser ce dernier V4. Dans ce cas, après que cette double détection ait été réalisée, les moyens de contrôle MC du premier véhicule V1 peuvent inclure dans leur message (destiné au deuxième véhicule V2) une information représentative de l'intention de dépassement du troisième véhicule V3 et des position et vitesse en cours du quatrième véhicule V4. Ensuite dans la seconde étape une fois que le deuxième véhicule V2 a reçu le message émis par le premier véhicule V1, ses moyens de contrôle MC peuvent déterminer si il peut dépasser sans risque le premier véhicule V1 en fonction également de l'intention de dépassement du troisième véhicule V3 et des position et vitesse en cours du quatrième véhicule V4.

On notera que cette dernière détermination peut également et éventuellement prendre en compte des informations auxiliaires comme par exemple la capacité d'accélération du troisième véhicule V3 et/ou la capacité d'accélération du deuxième véhicule V2. La capacité d'accélération du troisième véhicule V3 peut être fournie par ce dernier (V3) dans un message émis par voie d'ondes.

La double détection précitée des quatrième V4 et troisième V3 véhicules, de l'intention de dépasser de ce dernier (V3), et des informations qui les représentent (au moins leurs positions et vitesses) peut se faire de trois façons.

Une première façon consiste à utiliser des moyens d'acquisition MA et les moyens de détection MD du premier véhicule V1. Si les moyens de détection MD détectent des quatrième V4 et troisième V3 véhicules circulant à contresens sur la seconde voie de circulation VC2, et l'intention de dépasser du troisième véhicule V3, ils en informent le dispositif d'aide DA de leur premier véhicule V1, et les moyens de contrôle MC de ce dispositif d'aide DA déclenchent l'émission par voie d'ondes à destination du deuxième véhicule V2 d'un message comportant les position et vitesse détectées des quatrième V4 et troisième V3 véhicules, une information qui est représentative du fait que ce troisième véhicule V3 circule à contresens et veut effectuer un dépassement du quatrième véhicule V4, et ses propres position et vitesse en cours.

Une deuxième façon consiste à utiliser des informations qui ont été déterminées par des équipements électroniques du quatrième véhicule V4 (au moins sa position et sa vitesse) et du troisième véhicule V3 (au moins sa position et sa vitesse et son intention de dépasser), et que ces quatrième V4 et troisième V3 véhicules ont intégré dans des messages qu'ils ont émis par voie d'ondes à destination des autres véhicules présents dans leur environnement. On comprendra qu'à réception de ce message, le premier véhicule V1 le transmet à son dispositif d'aide DA, et les moyens de contrôle MC de ce dispositif d'aide DA déclenchent l'émission par voie d'ondes à destination du deuxième véhicule V2 d'un message comportant les position et vitesse détectées des quatrième V4 et troisième V3 véhicules, une information qui est représentative du fait que ce troisième véhicule V3 circule à contresens et veut effectuer un dépassement du quatrième véhicule V4, et ses propres position et vitesse en cours.

Une troisième façon est une combinaison des première et deuxième façons. Elle consiste à utiliser des informations qui ont été déterminées par des équipements électroniques des quatrième V4 et troisième V3 véhicules et transmises par voie d'ondes dans des messages, et des informations complémentaires des précédentes et fournies par les moyens de détection MD du premier véhicule V1. Par exemple dans la première étape le premier véhicule V1 peut déterminer l'intention de dépassement du troisième véhicule V3 en fonction de données numériques d'observation qui sont fournies par certains de ses moyens d'acquisition MA et/ou par le troisième véhicule V3.

On comprendra qu'une fois que le dispositif d'aide DA du premier véhicule V1 dispose de toutes les informations relatives aux quatrième V4 et troisième V3 véhicules et concernant ses propres position et vitesses en cours, les moyens de contrôle MC de ce dispositif d'aide DA déclenchent l'émission par voie d'ondes à destination du deuxième véhicule V2 d'un message comportant les position et vitesse détectées des quatrième V4 et troisième V3 véhicules, une information qui est représentative du fait que ce troisième véhicule V3 circule à contresens, et ses propres position et vitesse en cours.

En résumé, dans la première étape le premier véhicule V1 peut déterminer chaque position et chaque vitesse de chaque véhicule qui le précède ou qui circule à contresens en fonction de données d'observation fournies par ses moyens d'acquisition MA et/ou par au moins un véhicule qui le précède ou qui circule à contresens.

On notera également que dans la seconde étape les moyens de contrôle MC du dispositif d'aide DA du deuxième véhicule V2 génèrent, à destination du conducteur, un message qui peut être textuel et/ou audio. Un message de type textuel peut être affiché sur un écran d'affichage EC du deuxième véhicule V2, comme par exemple le combiné central (implanté en position centrale dans la planche de bord PB). Un message de type audio peut être diffusé par au moins un haut-parleur du deuxième véhicule V2.

On notera également que l'émission de message par voie d'ondes par un premier véhicule peut être soit permanente, soit déclenchée consécutivement à la détection de la présence d'un deuxième véhicule qui le suit.

Les informations qui sont fournies par le premier véhicule au deuxième véhicule qui le suit, et qui sont représentatives des véhicules qui le précèdent (et au moins ceux qui roulent à contresens), permettent avantageusement au deuxième véhicule d'être mieux informé sur les véhicules qu'il ne peut pas voir. Par conséquent, le risque de collision du deuxième véhicule avec l'un des véhicules qui précèdent le premier véhicule est très notablement réduit lorsque son conducteur ou un dispositif de conduite automatique souhaite effectuer un dépassement de ce premier véhicule.

## Revendications

1. Procédé d'aide au dépassement d'un premier véhicule (V1) par un deuxième véhicule (V2) alors qu'un troisième véhicule (V3) circule à contresens, ledit troisième véhicule (V3) étant invisible depuis le deuxième véhicule (V2), comprenant une première étape dans laquelle ledit premier véhicule (V1) émet par voie d'ondes, à destination dudit deuxième véhicule (V2) et après avoir détecté ledit troisième véhicule (V3), un message comportant des position et vitesse détectées de ce dernier (V3), le procédé étant **caractérisé en ce que** le message comporte une information représentative du fait que ledit troisième véhicule (V3) circule à contresens et ses propres position et vitesse en cours, et une seconde étape dans laquelle ledit deuxième véhicule (V2) détermine, à réception dudit message, si il peut dépasser sans risque ledit premier véhicule (V1) en fonction desdites position et vitesse détectées dudit troisième véhicule (V3), desdites position et vitesse en cours dudit premier véhicule (V1), et d'une distance le séparant de ce dernier (V1), et pour générer un message représentatif d'un résultat de cette détermination à destination de son conducteur et/ou autoriser ou interdire ledit dépassement en fonction dudit résultat.

2. Procédé selon la revendication 1, **caractérisé en ce que** dans ladite première étape ledit premier véhicule (V1) inclut dans ledit message une information représentative du nombre de véhicules circulant devant lui et dans le même sens et des estimées des positions et vitesses en cours respectives de ces derniers véhicules, et dans ladite seconde étape ledit deuxième véhicule (V2) détermine, à réception dudit message, si il peut dépasser sans risque ledit premier véhicule (V1) en fonction également desdites estimées.

3. Procédé selon l'une des revendications 1 et 2, **caractérisé en ce que** dans ladite première étape ledit premier véhicule (V1) inclut dans ledit message, après avoir détecté ledit troisième véhicule (V3) derrière un quatrième véhicule (V4) avec une intention de dépasser ce dernier (V4), une information représentative de cette intention de dépassement et des position et vitesse en cours dudit quatrième véhicule (V4), et dans ladite seconde étape ledit deuxième véhicule (V2) détermine, à réception dudit message, si il peut dépasser sans risque ledit premier véhicule (V1) en fonction également de ladite intention de dépassement et desdites position et vitesse en cours dudit quatrième véhicule (V4).

4. Procédé selon la revendication 3, **caractérisé en ce que** dans ladite première étape ledit premier véhicule (V1) détermine ladite intention de dépassement dudit troisième véhicule (V3) en fonction de données d'observation fournies par des moyens d'acquisition (MA) qu'il comprend et/ou par ledit troisième véhicule (V3).

5. Procédé selon l'une des revendications 1 à 4, **caractérisé en ce que** dans ladite première étape ledit premier véhicule (V1) détermine chaque position et chaque vitesse de chaque véhicule en fonction de données d'observation fournies par des moyens d'acquisition (MA) qu'il comprend et/ou par au moins un véhicule qui le précède ou qui circule à contresens.

6. Procédé selon l'une des revendications 1 à 5, **caractérisé en ce que** dans ladite seconde étape ledit deuxième véhicule (V2) génère un message textuel et/ou audio à destination de son conducteur.

7. Dispositif (DA) d'aide au dépassement d'un premier véhicule (V1) par un deuxième véhicule (V2) alors qu'un troisième véhicule (V3) circule à contresens, ledit troisième véhicule (V3) étant invisible depuis le deuxième véhicule (V2), comprenant des moyens de contrôle (MC) destinés à être implantés dans ledit deuxième véhicule (V2) et agencés, en cas de réception par ce dernier (V2) d'un message émis par voie d'ondes par ledit premier véhicule (V1) consécutivement à la détection dudit troisième véhicule (V3) et comportant des position et vitesse détectées de ce dernier (V3), le dispositif étant **caractérisé en ce que** le message comprend une information représentative du fait que le troisième véhicule (V3) circule à contresens et ses propres position et vitesse en cours, pour déterminer si ledit deuxième véhicule (V2) peut dépasser sans risque ledit premier véhicule (V1) en fonction desdites position et vitesse détectées dudit troisième véhicule (V3), desdites position et vitesse en cours dudit premier véhicule (V1), et d'une distance le séparant de ce dernier (V1), et pour générer un message représentatif d'un résultat de cette détermination à destination de son conducteur et/ou autoriser ou interdire ledit dépassement en fonction dudit résultat.

8. Dispositif selon la revendication 7, **caractérisé en ce que** lesdits moyens de contrôle (MC) sont agencés, lorsque ledit deuxième véhicule (V2) est suivi, pour déclencher l'émission par voie d'ondes d'un message comportant les position et vitesse détectées dudit troisième véhicule (V3), une information représentative du fait que ce troisième véhicule (V3) circule à contresens, et ses propres position et vitesse en cours.

9. Véhicule (Vj), **caractérisé en ce qu'**il comprend un dispositif d'aide (DA) selon l'une des revendications 7 et 8.

10. Véhicule selon la revendication 9, **caractérisé en ce qu'**il est de type automobile.

## Patentansprüche

1. Verfahren zur Unterstützung beim Überholen eines Fahrzeugs (V1) durch ein zweites Fahrzeug (V2), während ein drittes Fahrzeug (V3) entgegenkommt, wobei das dritte Fahrzeug (V3) von dem zweiten Fahrzeug (V2) ausgehend nicht sichtbar ist, das einen ersten Schritt umfasst, bei dem das erste Fahrzeug (V1) per Funk zu dem zweiten Fahrzeug (V2) und nachdem es das dritte Fahrzeug (V3) erfasst hat, eine Meldung sendet, die die erfasste Position und Geschwindigkeit dieses Letzteren (V3) sendet, Verfahren **dadurch gekennzeichnet, dass** die Meldung eine Information, die für die Tatsache repräsentativ ist, dass das dritte Fahrzeug (V3) entgegenkommt, und seine eigene aktuelle Position und Geschwindigkeit umfasst, und einen zweiten Schritt, bei dem das zweite Fahrzeug (V2) beim Empfang der Meldung bestimmt, ob es das erste Fahrzeug (V1), in Abhängigkeit von der erfassten Position und Geschwindigkeit des dritten Fahrzeugs (V3), der aktuellen Position und Geschwindigkeit des ersten Fahrzeugs (V1) und einem Abstand, der dieses von Letzterem (V1) trennt, gefahrlos überholen kann, und um eine Meldung, die für ein Resultat dieser Bestimmung repräsentativ ist, zu seinem Fahrer zu erzeugen und/oder das Überholen in Abhängigkeit von dem Resultat zu gestatten oder zu verbieten.

2. Verfahren nach Anspruch 1, **dadurch gekennzeichnet, dass** bei dem ersten Schritt das erste Fahrzeug (V1) in der Meldung eine Information einschließt, die für die Anzahl von Fahrzeugen repräsentativ ist, die vor ihm und in die gleiche Richtung fahren, und der jeweiligen aktuellen Schätzungen der Positionen und Geschwindigkeiten dieser letzteren Fahrzeuge, und bei dem zweiten Schritt das zweite Fahrzeug (V2) beim Empfang der Meldung bestimmt, ob es das erste Fahrzeug (V1) auch in Abhängigkeit von den Schätzungen gefahrlos überholen kann.

3. Verfahren nach einem der Ansprüche 1 und 2, **dadurch gekennzeichnet, dass** das erste Fahrzeug (V1) bei dem ersten Schritt in der Meldung nach dem Erfassen des dritten Fahrzeugs (V3) hinter einem vierten Fahrzeug (V4) mit einer Absicht, dieses (V4) zu überholen, eine Information einschließt, die für diese Überholabsicht repräsentativ ist, und die aktuelle Position und Geschwindigkeit des vierten Fahrzeugs (V4), und bei dem zweiten Schritt das zweite Fahrzeug (V2) beim Empfang der Meldung bestimmt, ob es das erste Fahrzeug (V1) in Abhängigkeit auch von der Überholabsicht und der aktuellen Position und Geschwindigkeit des vierten Fahrzeugs (V4) gefahrlos überholen kann.

4. Verfahren nach Anspruch 3, **dadurch gekennzeichnet, dass** das erste Fahrzeug (V1) bei dem ersten Schritt die Überholabsicht des dritten Fahrzeugs (V3) in Abhängigkeit von Beobachtungsdaten, die von Erfassungsmitteln (MA), die es umfasst, und/oder durch das dritte Fahrzeug (V3) geliefert werden, bestimmt.

5. Verfahren nach einem der Ansprüche 1 bis 4, **dadurch gekennzeichnet, dass** das erste Fahrzeug (V1) bei dem ersten Schritt jede Position und jede Geschwindigkeit jedes Fahrzeugs in Abhängigkeit von Beobachtungsdaten, die von Erfassungsmitteln (MA), die es umfasst, und/oder durch mindestens ein Fahrzeug, das vor ihm fährt oder entgegenkommt, geliefert werden, bestimmt.

6. Verfahren nach einem der Ansprüche 1 bis 5, **dadurch gekennzeichnet, dass** das zweite Fahrzeug (V2) bei dem zweiten Schritt eine Textmeldung und/oder Audiomeldung zu seinem Fahrer erzeugt.

7. Vorrichtung (DA) zur Unterstützung beim Überholen eines ersten Fahrzeugs (V1) durch ein zweites Fahrzeug (V2), während ein drittes Fahrzeug (V3) entgegenkommt, wobei das dritte Fahrzeug (V3) von dem zweiten Fahrzeug (V2) ausgehend nicht sichtbar ist, die Steuermittel (MC) umfasst, die dazu bestimmt sind, in dem zweiten Fahrzeug (V2) für den Fall implantiert und eingerichtet werden sollen, in dem dieses Letztere (V2) eine Meldung empfängt, die per Funk von dem ersten Fahrzeug (V1) im Anschluss an das Erfassen des dritten Fahrzeugs (V3) gesendet wird und die erfasste Position und Geschwindigkeit dieses Letzteren (V3) umfasst, Vorrichtung **dadurch gekennzeichnet, dass** die Meldung eine Information, die für die Tatsache repräsentativ ist, dass das dritte Fahrzeug (V3) entgegenkommt, und seine eigene aktuelle Position und Geschwindigkeit umfasst, um zu bestimmen, ob das zweite Fahrzeug (V2) das erste Fahrzeug (V1) in Abhängigkeit von der erfassten Position und Geschwindigkeit des dritten Fahrzeugs (V3), der aktuellen Position und Geschwindigkeit des ersten Fahrzeugs (V1) und einem Abstand, der dieses von diesem Letzteren (V1) trennt, gefahrlos überholen kann, und um eine Meldung, die für ein Resultat dieser Bestimmung repräsentativ ist, zu seinem Fahrer zu erzeugen und/oder das Überholen in Abhängigkeit von dem Resultat zu gestatten oder zu verbieten.

8. Vorrichtung nach Anspruch 7, **dadurch gekennzeichnet, dass** die Steuermittel (MC) eingerichtet sind, um, wenn dem zweiten Fahrzeug (V2) gefolgt wird, das Senden per Funk einer Meldung auszulösen, die die erfasste Position und Geschwindigkeit des dritten Fahrzeugs (V3), eine Information, die für die Tatsache, dass dieses dritte Fahrzeug (V3) entgegenkommt, repräsentativ ist und seine eigene aktuelle Position und Geschwindigkeit umfasst.

9. Fahrzeug (Vj), **dadurch gekennzeichnet, dass** es eine Unterstützungsvorrichtung (DA) nach einem der Ansprüche 7 und 8 umfasst.

10. Fahrzeug nach Anspruch 9, **dadurch gekennzeichnet, dass** es vom Typ Kraftfahrzeug ist.

## Claims

1. A method for assisting with overtaking a first vehicle (V1) by a second vehicle (V2) when there is a third oncoming vehicle (V3), said third vehicle (V3) being invisible from the second vehicle (V2), including a first step in which said first vehicle (V1) emits, over the air waves, to said second vehicle (V2) and after having detected said third vehicle (V3), a message comprising detected position and speed of the latter (V3), the method being **characterized in that** the message comprises representative information of the fact that said third vehicle (V3) is oncoming and its own current position and speed, and a second step in which said second vehicle (V2) determines, on receipt of said message, whether it can safely overtake said first vehicle (V1) on the basis of said detected position and speed of said third vehicle (V3), said current position and speed of said first vehicle (V1), and a distance separating it from the latter (V1), and for generating a message representative of a result of this determination, intended for its driver and/or to permit or prohibit said overtaking on the basis of said result.

2. The method according to claim 1, **characterized in that** in said first step, said first vehicle (V1) includes in said message information representative of the number of vehicles travelling in front of it and in the same direction and estimations of the respective current positions and speeds of these latter vehicles, and in said second step said second vehicle (V2) determines, on receipt of said message, whether it can safely overtake said first vehicle (V1) on the basis also of said estimations.

3. The method according to one of claims 1 and 2, **characterized in that** in said first step, said first vehicle (V1) includes in said message, after having detected said third vehicle (V3) behind a fourth vehicle (V4) with an intention to overtake this latter (V4), information representative of this intention to overtake and current position and speed of said fourth vehicle (V4), and in said second step said second vehicle (V2) determines, on receipt of said message, whether it can safely overtake said first vehicle (V1) on the basis also of said intention to overtake and said current position and speed of said fourth vehicle (V4) .

4. The method according to claim 3, **characterized in that** in said first step, said first vehicle (V1) determines said intention to overtake of said third vehicle (V3) on the basis of observation data provided by acquisition means (MA) which it comprises and/or by said third vehicle (V3).

5. The method according to one of claims 1 to 4, **characterized in that** in said first step, said first vehicle (V1) determines each position and each speed of each vehicle as a function of observation data provided by acquisition means (MA) which it comprises and/or by at least one vehicle which precedes it or which is oncoming.

6. The method according to one of claims 1 to 5, **characterized in that** in said second step, said second vehicle (V2) generates a textual and/or audio message intended for its driver.

7. A device (DA) for assisting with overtaking a first vehicle (V1) by a second vehicle (V2) when a third vehicle (V3) is oncoming, said third vehicle (V3) being invisible from the second vehicle (V2), including control means (MC) intended to be installed in said second vehicle (V2) and arranged, in the case of receipt by the latter (V2) of a message emitted over the air waves by said first vehicle (V1) consecutively to the detection of said third vehicle (V3) and comprising detected position and speed of the latter (V3), the device being **characterized in that** the message includes information representative of the fact that the third vehicle (V3) is oncoming and its current own position and speed, to determine whether said second vehicle (V2) can safely overtake said first vehicle (V1) on the basis of said detected position and speed of said third vehicle (V3), said current position and speed of said first vehicle (V1), and a distance separating it from the latter (V1), and to generate a message representative of a result of this determination intended for its driver and/or to permit or prohibit said overtaking on the basis of said result.

8. The device according to claim 7, **characterized in that** said control means (MC) are arranged, when said second vehicle (V2) is followed, to trigger the emission over the air waves of a message comprising the detected position and speed of said third vehicle (V3), representative information of the fact that this third vehicle (V3) is oncoming, and its own current position and speed.

9. A vehicle (Vj), **characterized in that** it includes a device for assistance (DA) according to one of claims 7 and 8.

10. The vehicle according to claim 9, **characterized in that** it is of the automobile type.
